# FASCICULE DE BREVET EUROPEEN

(11) **EP 1 360 148 B1**
(45) Date de publication et mention de la délivrance du brevet: **13.09.2006**
(21) Numéro de dépôt: 02708408.6
(22) Date de dépôt: 08.02.2002
(51) Int. Cl.: C02F 1/52, C02F 11/00, C02F 9/00

(54) **INSTALLATION DE TRAITEMENT D'EAU PAR FLOCS LESTES ET DEGRAISSAGE**
WASSERBEHANDLUNGSANLAGE FÜR BALLASTFLOCKUNG UND ENTFETTUNG
WATER TREATMENT PLANT WITH BALLASTED FLOCS AND DEGREASING

(30) Priorité: 09.02.2001 FR 0101833
(43) Date de publication de la demande: 12.11.2003
(73) Titulaire: OTV S.A., 94417 Saint-Maurice Cédex (FR)
(72) Inventeur: BINOT, Patrick, F-77600 Rentilly Par Bussy Saint-Georges (FR)
(74) Mandataire: Vidon, Patrice
(86) Numéro de dépôt international: PCT/FR2002/000502
(87) Numéro de publication internationale: WO 2002/064513

(56) Documents cités:
- DE-A- 19 527 290
- US-A- 5 770 091

## Description

Les installations de coagulation-floculation-décantation utilisées de façon classique en traitement de l'eau, particulièrement dans le domaine du traitement des eaux usées, sont traditionnellement complétées par des équipements de dessablage, de dégraissage et de système de traitement des boues qu'elles génèrent.

De telles installations sont ainsi précédées à leur amont de dispositifs permettant le dessablage des eaux brutes, afin d'éviter l'entraînement de grandes quantités de particules grossières et abrasives vers les étapes de traitement d'eau et de boue en aval du dessablage. Ces dispositifs de dessablage sont traditionnellement dimensionnés pour enlever le sable de plus de 200 micromètres au débit nominal des installations.

Des équipements de dégraissage sont également usuellement installés en amont des installations de coagulation-floculation-décantation, de façon à limiter la quantité de matières grasses envoyée dans les équipements prévus en aval. De telles matières grasses peuvent en effet générer diverses nuisances, telles que la création de boulettes de graisse éventuellement colmatantes, ou encore des dépôts sur les lamelles de décantation des décanteurs lamellaires, ou encore l'apparition de foisonnement bactérien dans les unités de boues activées ("bulking"). Le dégraissage s'effectue usuellement par flottation, c'est-à-dire par injection d'air, souvent dans l'équipement de dessablage, calculé dans ce cas à des vitesses au miroir de l'ordre de 10 à 20 m/h. Le dégraissage enlève environ 20% des matières extractibles à l'hexane contenues dans les eaux brutes.

Enfin, ces installations de coagulation-floculation-décantation sont souvent complétées en aval d'un système d'épaississement des boues, qui peut être indépendant ou intégré au fond de la zone de décantation. Lorsque ce système est indépendant, ceci implique l'inconvénient de nécessiter la construction d' un ouvrage de génie civil spécifique, avec des besoins de pompes de recirculation des boues à épaissir et des surverses d'épaississeur. Lorsque le système d'épaississement est intégré, ceci implique l'inconvénient d'entraîner un fort temps de séjour des boues dans le décanteur, ce qui ne favorise pas l'obtention d'une eau décantée d'excellente qualité.

Selon un type d'installation perfectionnée de coagulation-floculation-décantation, des moyens d'apport d'au moins un matériau granulaire plus dense que l'eau, tel que du sable, sont prévus de façon à lester les flocs et ainsi favoriser et accélérer la décantation de ceux-ci. Un tel dispositif, dit à flocs lestés, est notamment décrit dans le brevet français FR - 2627704 publié le 13 décembre 1991 au nom de la Demanderesse.

C'est plus précisément à ce type d'installation perfectionnée mettant en oeuvre un matériau granulaire de lestage que se rapporte la présente invention.

L'objectif de la présente invention est de proposer un nouveau procédé de traitement de l'eau mettant en oeuvre une installation de coagulation-floculation-décantation par flocs lestés et permettant de diminuer considérablement la taille de l'installation correspondante.

Plus précisément, la présente invention a pour objectif de réduire considérablement le nombre d'équipements et d'ouvrages de génie civil nécessaires au traitement d'un effluent en combinant tout ou partie des opérations de dessablage, dégraissage, coagulation, décantation ou autre moyens de séparation gravitaire tel que le cyclonage, épaississement dans un même ouvrage.

Ces objectifs sont atteints grâce à l'invention qui concerne une nouvelle utilisation d'un dispositif de coagulation-floculation-décantation à flocs lestés par du microsable ou un matériau équivalent pour le traitement des eaux caractérisée en ce qu'elle consiste à procéder au dégraissage desdites eaux au sein même dudit dispositif de façon à en éliminer plus de 20 % des matières extractibles à l'hexane sans avoir recours à des moyens distincts de dégraissage par flottation.

En effet, la Demanderesse a constaté que, de façon surprenante et inattendue pour l'homme de l'art habitué à des rendements d'abattement par les dégraisseurs usuels de l'ordre de 20 % des matières extractibles à l'hexane (MEH), la technique de floculation-décantation à floc lesté permet d'abattre plus de 20 % des MEH entrantes, couramment de 50 % à 60 % des MEH entrantes.

Cette propriété permet d'éliminer totalement l'étape de dégraissage traditionnelle à l'air, les graisses étant largement éliminées par le lestage du floc, et extraites avec les boues.

On notera qu'il a été déjà proposé dans l'état de la technique de combiner certaines étapes de dégraissage et de dessablage autour d'un décanteur à floc lesté de boues recirculées, sans toutefois parvenir à éliminer la nécessité d'un dégraissage-dessablage avec injection d'air, qui nécessite une surface de dessablage dégraissage conséquente pour avoir une bonne efficacité, et qui risque de troubler la bonne décantation ultérieure de flocs sans sable, par entraînement de bulles d'air, si la surface de dessablage-dégraissage est réduite en diminuant son efficacité pour diminuer son emprise au sol.

Préférentiellement, la nouvelle utilisation selon l'invention consiste à procéder au dégraissage desdites eaux au sein même dudit dispositif de façon à en éliminer plus de 50 % des matières extractibles à l'hexane.

Selon une variante avantageuse, l'invention consiste à procéder également au dessablage au moins partiel desdites eaux au sein même dudit dispositif de coagulation-floculation-décantation.

Préférentiellement, ledit dispositif de coagulation-floculation-décantation est utilisé avec des moyens grossiers de dessablage rapide amont présentant un pouvoir de coupure compris entre 200 et 300 micromètres fonctionnant à une vitesse superficielle supérieure à 15 m/h, de façon préférée entre toutes comprise entre 80 et 200 m/h.

L'invention porte également sur toute installation pour le traitement des eaux comprenant un dispositif de coagulation-floculation-décantation à flocs lestés par du micro-sable ou un matériau équivalent caractérisée en ce qu'elle ne comprend pas de moyens de dégraissage prévus en amont du dispositif de coagulation-floculation-décantation, le dégraissage desdites eaux étant assuré au sein même du dispositif de coagulation-floculation-décantation sans moyens d'injection d'air ou de gaz équivalent.

Préférentiellement, ledit dispositif présente :
- au moins une zone de coagulation pourvue de moyens d'amenée d'eau , de moyens d'amenée d'au moins un réactif coagulant, de moyens d'amenée d'au moins un matériau granulaire plus dense que l'eau et de moyens d'agitation ;
- au moins une zone de floculation munie de moyens d'agitation ; et,
- au moins une zone de décantation ou au moins une zone de séparation gravitaire par cyclonage ou effet vortex, pourvue d'une zone de récupération et d'évacuation de boues et de moyens d'évacuation d'eau clarifiée,
- des moyens de recyclage d'au moins une partie du matériau granulaire contenue dans lesdites boues vers ladite chambre de floculation incluant au moins un hydrocyclone.

Selon une variante, l'installation selon l'invention ne comprend également pas de moyens de dessablage par flottation prévus en amont du dispositif de coagulation-floculation-décantation, le dessablage desdites eaux étant assuré par ledit dispositif coagulation-floculation-décantation.

Selon une autre variante, ladite installation inclut des moyens amont de dessablage rapide desdites eaux présentant un pouvoir de coupure compris entre 100 et 300 micromètres.

De tels moyens de dessablage seront utilisés lorsque la quantité de sables grossiers de l'eau brute entraînera un risque d'accumulation trop rapide de sables dans l'installation, difficilement gérable par déconcentration périodique du sable dans le floculateur décanteur à floc lesté.

Préférentiellement, lesdits moyens de dessablage rapide sont du type à effet de cyclonage ou à effet de vortex.

Préférentiellement, ces moyens de dessablage seront mis en oeuvre avec des temps de séjour de l'ordre de la minute et des vitesses superficielles comprises entre 80 et 300 m/h environ.

Les moyens de dessablage pourront constituer la zone de coagulation, le coagulant étant alors injecté dans lesdits moyens de dessablage ou en amont de ceux-ci et étant intimement mis en contact avec les colloïdes à déstabiliser dans les moyens de dessablage à grande vitesse.

Egalement préférentiellement, l'installation comprend des moyens intégrés d'épaississement d'au moins une partie de l'effluent provenant dudit hydrocyclone.

Ces moyens d'épaississement pourront être directement contigus à l'un des ouvrages de coagulation floculation ou en amont de ceux ci. Ainsi, ces moyens d'épaississement pourront être intégrés sans pompage complémentaire à ceux prévus pour le recyclage des boues. Cette disposition permet donc de disposer d'un épaississement des boues intégré à l'ouvrage tout en évitant les difficultés d'exploitation liées à l'épaississement des boues directement en fond de décanteur.

Selon une variante de l'invention, lesdits moyens d'épaississement sont précédés d'une zone de dégazage. Cette zone de dégazage pourra revêtir n'importe quelle forme permettant de séparer les boues des gaz qu'elles ont emprisonné durant l'hydrocyclonage, telle qu'un bassin spécifique ou tout ou partie du canal conduisant les boues hydrocyclonées vers lesdits moyens d'épaississement.

Selon une variante intéressante de l'invention, lesdits moyens intégrés d'épaississement comprennent au moins une colonne de décantation pourvue dans sa partie supérieure de lamelles de décantation et dans sa partie inférieure d'une évacuation de boues épaissies, et au moins une canalisation d'amenée d'au moins une partie du débit sortant de l'hydrocyclone dans ladite colonne de décantation.

Préférentiellement, lesdits moyens intégrés d'épaississement sont pourvus de moyens d'amenée d'au moins un réactif floculant.

Egalement préférentiellement ces moyens incluent aussi au moins une cuve de floculation amont .

En effet l'épaississement des boues issues de la décantation à floc lesté, déjà largement pré-chargées en polymère, permet, de façon surprenante par rapport à ce qui était connu de l'état de l'art, d'atteindre des siccités de 20 à 60g/let plus, pour des charges au radier très importantes, supérieures aux moins de 100 kgMES/m² de radier /jour usuellement prises en compte pour le dimensionnement des épaississeurs, et pouvant aller jusqu'à plus de 2000 kgMES/m²/jour, dans la mesure où une refloculation rapide des boues est prévue en amont de l'épaississeur, et que des lamelles permettent de maintenir la vitesse de Hazen des surverses en dessous d'une valeur dépendant de la qualité requise pour ces surverses (entre 2 et 10 m/h environ).

Préférentiellement, l'installation inclut aussi des moyens intégrés de récupération des flottants transitant dans la zone de coagulation et/ou dans la zone de floculation.

De tels moyens peuvent notamment être constitués par tout moyen connu de l'homme de l'art, tel que des goulottes pivotantes, des montées périodiques du niveau de l'eau vers un trop plein d'extraction des flottants, ou encore un dispositif d'écrémage de surface placé au(x) point(s) d'accumulation des flottants.

Avantageusement l'installation est pourvue d'une zone de dégazage des boues hydrocyclonées, confondue ou non avec la zone de floculation.

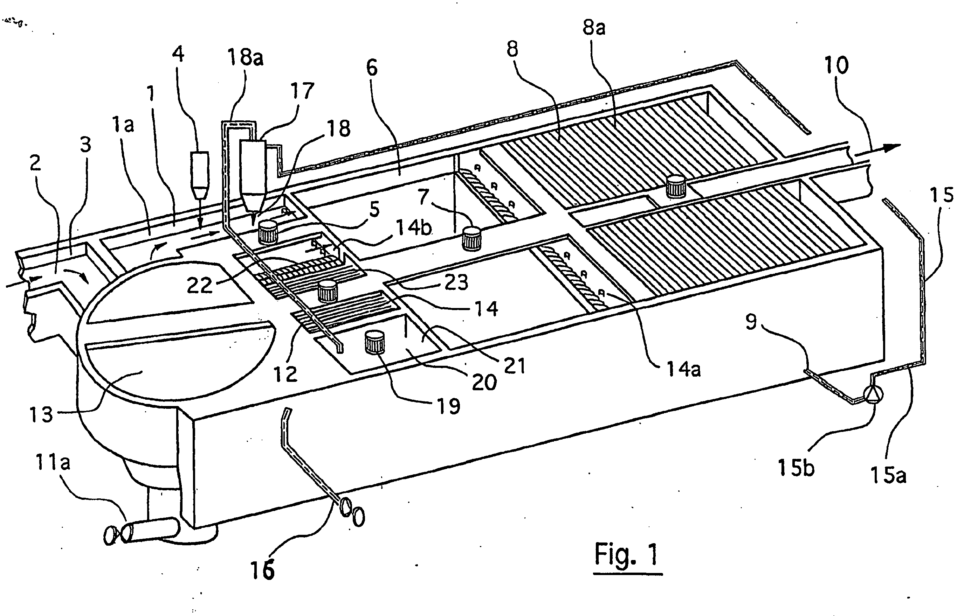

L'invention, ainsi que les différents avantages qu'elle présente seront plus facilement compris grâce à la description qui va suivre d'un mode non limitatif de réalisation de celle-ci, donné en référence à la figure unique.

En référence à celle-ci, l'installation comprend en série un dispositif de coagulation-floculation-décantation comprenant une chambre de coagulation 1 pourvue d'un agitateur 5, au moins une chambre de floculation 6 pourvue de moyens d'agitation 7 et un décanteur 8.

Ce dispositif est, de façon classique, pourvue de moyens de distribution 4 d'un matériau granulaire de lestage des flocs, en l'occurrence du sable, et de moyens d'agitation 5.

Le décanteur 8 est pourvu de lamelles 8a (dans d'autres modes de réalisation, il pourra en être dépourvu) et présente dans sa partie inférieure une zone de récupération et d'évacuation 9 des boues et dans sa partie supérieure des moyens d'évacuation 10 de l'eau clarifiée. Des moyens de récupération des flottants 14a sont prévus à l'entrée du décanteur 8.

L'installation comprend des moyens de recyclage 15 du matériau granulaire récupéré dans la zone de récupération et d'évacuation 9 du décanteur 8. Une canalisation 15a coopérant avec une pompe 15b dirige les boues récupérées en 9 vers un hydrocyclone 17 pourvu de moyens de distribution 18 du matériau granulaire séparé dans la chambre de coagulation 1.

Conformément à la présente invention, l'installation comprend, en entrée des moyens d'arrivée d'eau à traiter 2, des moyens 3 d'injection d'un réactif coagulant, suivi de moyens de dessablage grossier 13 présentant un pouvoir de coupure de 300 µm. Le dessableurl3 présente dans sa partie inférieure des moyens d'évacuation 11a de sables et graviers vers une unité de traitement de sables (non représentée).

Egalement selon l'invention, l'installation présente une canalisation 18a permettant de dériver une partie du débit provenant de l'hydrocyclone 17 vers des moyens d'épaississement 12 incluant un décanteur 14 pourvu, dans sa partie supérieure, de lamelles 23 et d'une évacuation 22 d'effluent clarifié vers la chambre de coagulation 1 et pourvue, dans sa partie inférieure, de moyens d'évacuation 16 de boues épaissies vers ladite unité de traitement de boues. Les moyens d'épaississement comprennent de plus une cuve de floculation amont 20 (servant éventuellement de zone de dégazage) pourvue de moyens d'agitation 19 et des moyens 21 d'injection d'un réactif floculant.

Selon l'invention, aucun moyens de dégraissage de l'effluent n'est prévu en amont du dispostif de coagulation-floculation-décantation. Aucun moyen de dégraissage intégrant une injection d'air ou de gaz équivalent dans l'effluent n'est également prévue.

On notera que l'ensemble des éléments représenté sur 1 figure sont intégrés dans un même génie civil .

Le fonctionnement de l'installation est le suivant.

L'effluent entrant dans l'installation par les moyens d'amenée 2 est acheminé vers le dessableur 13 où les particules (sables) qu'il contient présentant une taille supérieure à 300 µm environ sont séparées et recueillies sous forme de sables de pré-traitement pour être évacuées en 11a. Avant d'arriver au dessableur 13, un réactif coagulant est injecté dans les eaux grâce aux moyens 3.

L'effluent transite ensuite dans la zone d'injection où est ajouté un polymère, puis dans la zone de floculation 6, puis dans le décanteur lamellaire 8. L'effluent dégraissé, dessablé et épuré est évacué en 10.

Les boues recueillies par le décanteur lamellaire 8 sont acheminées vers l'hydrocyclone 17 pour récupérer l'essentiel du matériau de lestage et le réacheminer par les moyens 18 dans la chambre d'injection 1. Au moins une partie de la surverse provenant de l'hydrocyclone est envoyée par la canalisation 18a vers les moyens d'épaissisement 12. Les boues provenant de ces moyens sont évacués par les moyens 16 tandis que la surverse 22 est renvoyée vers la chambre d'injection 1.

L'installation ici décrite permet d'effectuer le dégraissage le dessablage et l'épuration des eaux dans un volume beaucoup plus réduit que dans l'art antérieur qui nécessitait l'utilisation de moyens amont de dégraissage.

L'étape de dégraissage est assurée de façon intrinsèque et surprenante au sein même de la décantation à flocs lestés. Le dessablage est efficacement complété de façon intrinsèque également par la décantation lestée, celle ci permettant d'éliminer quasiment tout le sable de l'eau traitée en le faisant décanter à grande vitesse (supérieure à 15 m/h, usuellement entre 80 et 200 m/h) avec le floc, tandis que l'hydrocyclonage empêche le départ avec les boues du sable de dimension supérieure à son seuil de coupure, largement inférieur aux 200 micromètres habituellement demandés au dessablage, et usuellement de l'ordre de 30 à 100 micromètres.

Le mode de réalisation de l'invention ici décrit n'a pas pour objet de réduire la portée de celle-ci. Il pourra donc y être apporté de nombreuses modifications sans sortir de son cadre.

## Revendications

1. Installation pour le traitement des eaux comprenant un dispositif de coagulation-floculation-décantation à flocs lestés par du microsable ou un matériau équivalent présentant :
- au moins une zone d'injection (1) pourvue de moyens d'amenée d'eau coagulée par un réactif coagulant, de moyens d'amenée (4) d'au moins un matériau granulaire plus dense que l'eau (4) et de moyens d'agitation (5) ;
- au moins une zone de floculation (6) munie de moyens d'agitation (7); et,
- au moins une zone de décantation (8) ou au moins une zone de séparation gravitaire par cyclonage ou effet vortex, pourvue d'une zone de récupération et d'évacuation de boues (9) et de moyens d'évacuation (10) d' eau clarifiée ;
- des moyens de recyclage (15) d'au moins une partie du matériau granulaire contenue dans lesdites boues vers ladite chambre de floculation (1) incluant au moins un hydrocyclone (17),
la dite installation étant **caractérisée en ce que** :
- elle ne comprend pas de moyens de dégraissage prévus en amont du dispositif de coagulation-floculation-décantation, le dégraissage desdites eaux étant assuré au sein même du dispositif de coagulation-floculation-décantation, ni de moyens d'injection d'air ou de gaz équivalent intégrés dans ce dispositif ;
- elle comprend des moyens intégrés d'épaississement (12) d'au moins une partie de l'effluent provenant dudit hydrocyclone (17).

2. Installation selon la revendication 1 **caractérisée en ce qu'**elle ne comprend également pas de moyens de dessablage par flottation prévus en amont du dispositif de coagulation-floculation-décantation, le dessablage desdites eaux étant assuré par ledit dispositif coagulation-floculation-décantation.

3. Installation selon la revendication 1 **caractérisée en ce qu'**elle présente des moyens amont de dessablage rapide desdites eaux présentant un pouvoir de coupure compris entre 100 et 300 micromètres et ne mettant pas en oeuvre d'injection d'air.

4. Installation selon la revendication 3 **caractérisée en ce que** lesdits moyens de dessablage rapide sont du type à effet de cyclonage ou à effet de vortex.

5. Installation selon l'une des revendications 1 à 4 **caractérisée en ce que** lesdits moyens d'épaississement sont précédés d'une zone de dégazage.

6. Installation selon l'une des revendications 1 à 5 **caractérisée en ce que** lesdits moyens intégrés d'épaississement (12) comprennent au moins une colonne de décantation (14) pourvue dans sa partie supérieure de lamelles (23) de décantation et dans sa partie inférieure d'une évacuation (16) de boues épaissies, et au moins une canalisation d'amenée (18a) d'au moins une partie du débit sortant de l'hydrocyclone dans ladite colonne de décantation.

7. Installation selon l'une des revendications 1 à 6 **caractérisée en ce que** lesdits moyens intégrés d'épaississement (12) sont pourvus de moyens d'amenée (21) d'au moins un réactif floculant.

8. Installation selon l'une quelconque des revendications 1 à 7 **caractérisée en ce que** lesdits moyens intégrés (12) d'épaississement intègrent au moins une cuve amont (20).

9. Installation selon l'une quelconque des revendications 1 à 8 **caractérisée en ce qu'**elle inclut des moyens intégrés de récupération des flottants (14a,14b) transitant dans la zone de coagulation et/ou dans la zone de floculation.

10. Installation selon la revendication 9 dans laquelle est prévue une zone de dégazage des boues hydrocyclonées, confondue ou non avec la zone de floculation.

11. Utilisation d'un dispositif de coagulation-floculation-décantation à flocs lestés par du microsable ou un matériau équivalent pour le traitement des eaux selon l'une quelconque des revendications 1 à 10 **caractérisée en ce qu'**elle consiste à procéder au dégraissage desdites eaux au sein même dudit dispositif de façon à en éliminer plus de 20 % des matières extractibles à l'hexane sans avoir recours à des moyens de dégraissage par flottation par injection d'air ou d'un gaz équivalent.

12. Utilisation selon la revendication 11 **caractérisée en ce qu'**elle consiste à procéder au dégraissage desdites eaux au sein même dudit dispositif de façon à en éliminer plus de 50 % des matières extractibles à l'hexane.

13. Utilisation selon la revendication 11 ou 12 **caractérisée en ce qu'**elle consiste à procéder au dessablage au moins partiel desdites eaux au sein même dudit dispositif.

14. Utilisation selon la revendication 13 **caractérisée en ce qu'**il consiste à utiliser ledit dispositif de coagulation-floculation-décantation avec des moyens grossiers de dessablage rapide amont fonctionnant à une vitesse superficielle supérieure à 15 m/h.

15. Utilisation selon la revendication 14 **caractérisée en ce qu'**il consiste à utiliser ledit dispositif de coagulation-floculation-décantation avec des moyens grossiers de dessablage rapide amont fonctionnant à une vitesse superficielle comprise entre 80 et 200 m/h.

## Claims

1. Water-treatment plant comprising a coagulation-flocculation-sedimentation device with flocs ballasted by microsand or an equivalent material, having:
- at least one injection zone (1) provided with means for intake of water that has been coagulated by a coagulating reagent, means (4) for intake of at least one granular material that is denser than water (4), and stirring means (5);
- at least one flocculation zone (6) provided with stirring means (7); and
- at least one sedimentation zone (8) or at least one zone for gravitational separation by cycloning or by a vortex effect, provided with a zone (9) for recovery and evacuation of sludge and with means (10) for evacuation of clarified water,
means (15) for recycling at least some of the granular material contained in said sludge to said flocculation chamber (1), including at least one hydrocyclone (17),
said plant being **characterised in that**:
- it does not comprise degreasing means provided upstream of the coagulation-flocculation-sedimentation device, the degreasing of said water being ensured within the coagulation-flocculation-sedimentation device itself, and neither does it comprise means for injection of air or of equivalent gas which are integrated within said device;
- it comprises integrated means (12) for thickening at least some of the effluent coming from said hydrocyclone (17).

2. Plant according to Claim 1, **characterised in that** it also does not comprise any means for desanding by flotation which are provided upstream of the coagulation-flocculation-sedimentation device, the desanding of said water being ensured by said coagulation-flocculation-sedimentation device.

3. Plant according to Claim 1, **characterised in that** it has upstream means for rapid desanding of said water, having a cut-off capacity between 100 micrometres and 300 micrometers, and not using injection of air.

4. Plant according to Claim 3, **characterised in that** said means for rapid desanding are of the cycloning-effect type or vortex-effect type.

5. Plant according to one of Claims 1 to 4, **characterised in that** said thickening means are preceded by a degassing zone.

6. Plant according to one of Claims 1 to 5, **characterised in that** said integrated thickening means (12) comprise at least one sedimentation column (14) provided in its upper part with sedimentation lamellae (23) and in its lower part with a discharge (16) for thickened sludge, and at least one inlet pipe (18a) for at least some of the output flowing out of the hydrocyclone into said sedimentation column.

7. Plant according to one of Claims 1 to 6, **characterised in that** said integrated thickening means (12) are provided with means (21) for supply of at least one flocculating reagent.

8. Plant according to any one of Claims 1 to 7, **characterised in that** said integrated thickening means (12) incorporate at least one upstream tank (20).

9. Plant according to any one of Claims 1 to 8, **characterised in that** it includes integrated means for recovery of the floating matter (14a, 14b) passing through the coagulation zone and/or the flocculation zone.

10. Plant according to Claim 9, in which a zone for degassing of hydrocycloned sludge is provided which may or may not merge with the flocculation zone.

11. Use of a coagulation-flocculation-sedimentation device with flocs ballasted by microsand or by an equivalent material for treatment of water, according to any one of Claims 1 to 10, **characterised in that** it consists in undertaking the degreasing of said water within said device itself so as to eliminate from said water more than 20 % of the hexane-extractable matter without having recourse to means for degreasing by flotation, by injection of air or of an equivalent gas.

12. Use according to Claim 11, **characterised in that** it consists in undertaking the degreasing of said water within said device itself so as to eliminate from said water more than 50% of the hexane-extractable matter.

13. Use according to Claim 11 or 12, **characterised in that** it consists in undertaking the at least partial desanding of said water within said device itself.

14. Use according to Claim 13, **characterised in that** it consists in utilising said coagulation-flocculation-sedimentation device with coarse means for rapid upstream desanding operating at a superficial speed greater than 15 m/h.

15. Use according to Claim 14, **characterised in that** it consists in utilising said coagulation-flocculation-sedimentation device with coarse means for rapid upstream desanding operating at a superficial speed between 80 m/h and 200 m/h.

## Patentansprüche

1. Anlage zur Wasserbehandlung, die eine Vorrichtung zur Koagulation-Flockung-Klärung mit durch Mikrosand oder durch ein gleichwertiges Material beschwerten Flocken umfasst, die Folgendes aufweist:
- mindestens eine Einspritzzone (1), ausgestattet mit Mitteln der Zufuhr von Wasser, das durch ein Koagulationsreagens koaguliert wird, mit Mitteln der Zufuhr (4) mindesten eines körnigen Materials, das dichter ist als Wasser, und mit Rührmitteln (5);
- mindestens eine Flockungszone (6), die mit Rührmitteln (7) versehen ist; und
- mindestens eine Klärzone (8) oder mindestens einer Zone zur Schwerkraftabscheidung durch Zyklonieren oder Vortex-Effekt, ausgestattet mit einer Zone zur Rückgewinnung und Ableitung der Schlämme (9) und Mitteln zur Ableitung (1) des geklärten Wassers;
- Mittel der Wiedergewinnung (15) mindestens eines Teils des in den besagten Schlämmen enthaltenen körnigen Materials in Richtung der besagten Flockungskammer (1), die mindestens einen Hydrozyklon (17) umfasst,
wobei die besagte Anlage **dadurch gekennzeichnet ist, dass**:
- sie vor der Vorrichtung zur Koagulation-Flockung-Klärung weder Mittel zur Entfettung aufweist, die Entfettung des besagten Wassers in der Vorrichtung zur Koagulation-Flockung-Klärung selbst gewährleistet wird, noch in der Vorrichtung integrierte Mittel zur Einspritzung von Luft oder gleichwertigem Gas aufweist;
- sie integrierte Mittel zur Eindickung (12) mindestens eines Teils des aus dem besagten Hydrozyklon (17) kommenden Abwassers aufweist.

2. Anlage gemäß Anspruch 1, **dadurch gekennzeichnet, dass** sie vor der Vorrichtung zur Koagulation-Flockung-Klärung auch keine Mittel zur Entsandung durch Flotation aufweist, da die Entsandung des besagten Wassers durch die Vorrichtung zur Koagulation-Flockung-Klärung selbst gewährleistet wird.

3. Anlage gemäß Anspruch 1, **dadurch gekennzeichnet, dass** sie vorgelagerte Mittel zur schnellen Entsandung des besagten Wassers aufweist, die ein Trennvermögen zwischen 100 und 300 Mikrometern aufweisen und keine Lufteinspritzung einsetzen.

4. Anlage gemäß Anspruch 3, **dadurch gekennzeichnet, dass** die besagten Mittel zur schnellen Entsandung vom Typ mit Zyklonier-Effekt oder Vortex-Effekt sind.

5. Anlage gemäß einem der Ansprüche 1 bis 4, **dadurch gekennzeichnet, dass** den besagten Mittel zur Eindickung eine Zone der Entgasung vorausgeht.

6. Anlage gemäß einem der Ansprüche 1 bis 5, **dadurch gekennzeichnet, dass** die besagten integrierten Mittel zur Eindickung (12) mindestens eine Klärkolonne (14), die in ihrem oberen Teil mit Lamellen (23) zur Klärung und in ihrem unteren Teil mit einem Ablauf (16) der eingedickten Schlämme ausgestattet ist, und mindestens eine Zuleitung (18a) für mindestens einen Teil der aus dem Hydrozyklon in die besagte Klärkolonne gelangenden Durchflussmenge aufweisen.

7. Anlage gemäß einem der Ansprüche 1 bis 6, **dadurch gekennzeichnet, dass** die besagten integrierten Mittel zur Eindickung (12) mit einem Mittel zur Zufuhr (21) mindestens eines Flockungsreagens versehen sind.

8. Anlage gemäß einem der Ansprüche 1 bis 7, **dadurch gekennzeichnet, dass** die besagten integrierten Mittel zur Eindickung (12) mindestens eine vorgelagerte Wanne (20) enthalten.

9. Anlage gemäß einem der Ansprüche 1 bis 8, **dadurch gekennzeichnet, dass** sie integrierte Mittel zur Rückgewinnung der Schwebstoffe (14a, 14b) umfasst, die die Koagulationszone und/oder die Flockungszone passieren.

10. Anlage gemäß Anspruch 9, in der eine Zone zur Entgasung der hydrozyklonierten Schlämme vorgesehen wird, die mit der Flockungszone zusammenfällt oder nicht.

11. Verwendung einer Vorrichtung zur Koagulation-Flockung-Klärung mit durch Mikrosand oder durch ein gleichwertiges Material beschwerten Flocken zur Wasserbehandlung gemäß einem der Ansprüche 1 bis 10, **dadurch gekennzeichnet, dass** sie in der Entfettung des besagten Wassers in der besagten Vorrichtung selbst besteht, so dass daraus mehr als 20% der durch Hexan extrahierbaren Stoffe entfernt werden, ohne auf Mittel zur Entfettung durch Flotation, durch Einspritzen von Luft oder eines gleichwertigen Gases zurückzugreifen.

12. Verwendung gemäß Anspruch 11, **dadurch gekennzeichnet, dass** sie in der Entfettung des besagten Wassers in der besagten Vorrichtung selbst besteht, so dass daraus mehr als 50% der durch Hexan extrahierbaren Stoffe entfernt werden.

13. Verwendung gemäß Anspruch 11 oder 12, **dadurch gekennzeichnet, dass** sie in der Entsandung mindestens eines Teils des besagten Wassers in der besagten Vorrichtung selbst besteht.

14. Verwendung gemäß Anspruch 13, **dadurch gekennzeichnet, dass** sie in der Verwendung der besagten Vorrichtung zur Koagulation-Flockung-Klärung mit groben Mitteln zur schnellen vorgelagerten Entsandung besteht, die mit einer Oberflächengeschwindigkeit von mehr als 15 m/h funktionieren.

15. Verwendung gemäß Anspruch 14, **dadurch gekennzeichnet, dass** sie in der Verwendung der besagten Vorrichtung zur Koagulation-Flockung-Klärung mit groben Mitteln zur schnellen vorgelagerten Entsandung besteht, die mit einer Oberflächengeschwindigkeit zwischen 80 und 200 m/h funktionieren.
